# EUROPÄISCHE PATENTSCHRIFT

(11) **EP 0 300 250 B1**
(45) Veröffentlichungstag und Bekanntmachung des Hinweises auf die Patenterteilung: **05.06.1996**
(21) Anmeldenummer: 88110547.2
(22) Anmeldetag: 01.07.1988
(51) Int. Cl.: A61M 1/16, C08B 13/00, D01F 2/28, B01D 61/24

(54) **Biokompatible Hämodialysemembranen aus modifizierter Cellulose**
Modified cellulose biocompatible hemodialysis membranes
Membranes biocompatibles pour l'hémodialyse à base de cellulose modifiée

(30) Priorität: 18.07.1987 DE 3723897
(43) Veröffentlichungstag der Anmeldung: 25.01.1989
(73) Patentinhaber: Akzo Nobel N.V., NL-6824 BM Arnhem (NL)
(72) Erfinder: Diamantoglou, Michael, Dr., D-8765 Erlenbach (DE)
(74) Vertreter: Fett, Günter

(56) Entgegenhaltungen:
- EP-A- 0 172 437
- US-A- 2 136 299
- US-A- 3 639 665
- US-A- 4 352 770
- US-A- 4 520 192
- Römpps Chemie Lexikon, 8. Aufl., Franckh'sche Verlagsbuchhandlung, Stuttgart, Seiten 623-627 (1979) und 2984 (1985)
- Aldrich Chemikalienkatalog, Seite 269, Aldrich-Chimie S.a.r.l., Strasbourg, 1990

## Beschreibung

Die Erfindung betrifft biokompatible Hämodialysemembranen aus modifizierter Cellulose und ein Verfahren zu ihrer Herstellung.

Aus der US-PS 4 278 790 sind Celluloselösungen unter Verwendung von Lithiumchlorid und Dimethylacetamid als Lösungsmittel bekannt. Die Lösungen können bis zu 8 % Lithiumchlorid und bis zu etwa 3 % Cellulose enthalten. In diesen Celluloselösungen können auch Cellulosederivate hergestellt werden. Gemäß der US-Patentschrift werden die Lösungen in der Weise hergestellt, daß in ein Gemisch von Dimethylacetamid und Lithiumchlorid Cellulose eingetragen wird und zunächst für eine längere Zeit auf etwa 150 °C erhitzt wird. Später wird die dann gebildete Lösung auf Raumtemperatur unter Rühren abgekühlt.

Außerdem sind aus der DE-OS 33 12 022 sowie der DE-OS 32 46 417 wasserunlösliche Fasern aus Celluloseester bekannt. Sie weisen ein extrem hohes Adsorptionsvermögen für Wasser und physiologische Flüssigkeiten auf. Das mag für manche Einsatzgebiete ein Vorteil sein, für viele ist es jedoch ein Nachteil.

Die US-A-4,352,770 beschreibt ein Verfahren zur Herstellung von geformten cellulosischen Produkten, bei dem aktivierte Cellulose in einem Gemisch aus Dimethylacetamid, 1-Methyl-2-pyrrolidon oder einer Mischung hiervon und 3 - 15 Gewichtsprozent LiCl gelöst wird und anschließend auf übliche Weise verformt wird.

Gemäß der US-A-4,520,192 können Carboxyalkylacetyl-Cellulosen mit einem durchschnittlichen Substitutionsgrad (DS) von 0,2 bis 0,28 erhalten werden, indem ein Alkalimetallsalz eine Carboxylalkylcellulose mit einer wäßrigen Säure in die saure Form übergeführt wird und anschließend mit Essigsäure die saure Form acetyliert wird.

Letztendlich beschreibt die US-A-2,136,299 ein Verfahren zur Herstellung von Aminocellulose-Derivaten, indem ein Cellulosearylsulfonat mit einem Monoamin umgesetzt wird.

In keiner der drei letztgenannten Schriften werden Cellulosederivate beschrieben, mit denen sich Hämodialysemembranen auf einfache Art und Weise herstellen lassen.

Aus der EP-A- 0172437 ist bereits eine Dialysemembran mit verbesserter Biocompatibilität bekannt, die sich dadurch auszeichnet, daß der mittlere Substitutionsgrad einer modifizierten Cellulose 0,02 bis 0,07 beträgt. Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei
- X: für -NR''- und/oder -N^{⊕}R''₂- und/oder -S- und/oder -SO- und/oder -SO₂- und/oder 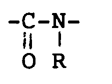 und/oder -CO-O- und/oder -O-,
- Y: für -R und/oder -NR₂ und/oder -Si(OR'')₃ und/oder -SO₃H und/oder -COOH und/oder -PO₃H₂ und/oder -N^{⊕}HR₂ bzw. deren Salze,
- R': für eine Alkylengruppe und/oder Cycloalkylengruppe und/oder Arylengruppe mit insgesamt 1 bis 25 C-Atomen,
- R'': für ein Wasserstoffatom oder R und
- R: für eine Alkylgruppe mit 1 bis 5 C-Atomen und/oder eine Cycloalkylgruppe und/oder Arylgruppe steht.

Diese bekannte Dialysemembran war bereits in der Lage, Blutgerinnung, Leucopenie und Komplementaktivierung in erheblichem Umfange zu reduzieren. Eine Adsorption von Beta-2-Mikroglobulin konnte jedoch in nennenswertem Umfange nicht festgestellt werden.

Aufgabe der vorliegenden Erfindung war es, biokompatible Hämodialysemembranen aus modifizierter Cellulose mit einer insbesondere verbesserten beta-2-Mikroglobulin-Adsorption bereitzustellen. Hierbei sollte die modifizierte Cellulose ein relativ hohes Molekulargewicht aufweisen und dennoch in hohen Lösungskonzentrationen zu Hämodialysemembranen verarbeitet werden können.

Gelöst wird die Aufgabe mit der Bereitstellung von biokompatiblen Hämodialysemembranen aus modifizierter Cellulose, die dadurch gekennzeichnet sind, daß sie aus einer modifizierten Cellulose einer durch die Formel 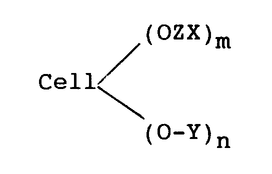
wiedergegebenen Struktur bestehen, worin
- -Z-: einen geradkettigen oder verzweigten Alkylen- und/oder Alkenylenrest und/oder einen Cycloalkylen- und/oder Arylen- und/oder Aralkylenrest und/oder den Rest einer gegebenenfalls substituierten heterocyclischen Verbindung darstellt,
- X: -H und/oder -NR₂ und/oder -N⁺R₃ und/oder -COOR und/oder -CO-NR₂ und/oder -CO-R und/oder -CS-R und/oder SO₃-R und/oder -SO₂-R und/oder -SO₂NR₂ und/oder -SR und/oder -PO(OR)₂ und/oder -PO(NR₂)₂ und/oder -CN und/oder -OR und/oder Halogen und/oder -Si(OR)₃ bedeutet, worin
- R: ein Wasserstoffatom und/oder eine geradkettige oder verzweigte Alkyl- und/oder Alkenylgruppe mit 1 bis 25 C-Atomen und/oder eine Cycloalkyl- und/oder Tolyl- und/oder Benzyl- und/oder Phenylgruppe ist, bei R=H eine Säuregruppe in X in den Fällen -COOH, -SO₃H und -PO₃H₂ auch in Salzform vorliegen kann und die organischen Reste R gegebenenfalls substituiert sein können,
- Y: die Reste -CO-R'' und/oder -CO-NHR'' und/oder -CO-NR''₂ und/oder -CS-R' und/oder -CO-OR' und/oder -CS-NR'₂ und/oder -SO₂-OR' und/oder -SO₂-R' und/oder -SO₂NR'₂ und/oder -PO(OR')₂ darstellen,
- R': einen geradkettigen oder verzweigten Alkyl- und/oder Alkenylrest mit 1 - 36 C-Atomen und/oder einen Cycloalkyl- und/oder Aryl- und/oder Arylalkylrest und/oder H darstellt, wobei bei R' = H die Säuregruppe in Y in dem Fall -PO₃H₂ auch in Salzform vorliegen kann und die organischen Reste R' gegebenenfalls substituiert sein können,
- R'': mit Ausnahme von H die gleiche Bedeutung wie R' besitzt,
m = 0-2,5,
n = 0,01 bis 2,95 ist,
und der in einer Cuen-Lösung nach DIN 54270 bestimmte Durchschnittspolymerisationsgrad > 600 bis 1650 ist.

Bevorzugt sind solche Hämodialysemembranen, bei denen in der modifizierten Cellulose Y einen -CO-R''-Rest darstellt, in dem R'' einen Alkylrest mit 1 - 4 C-Atomen und/oder einen (CH₂)ᵣ-COOH-Rest mit r = 1 oder 2 bedeutet, m = O und n ≦ 0,40 oder ≧ 0,80 ist.

Biokompatible Hämodialysemembranen nach einer weiteren bevorzugten Ausführungsform sind dadurch gekennzeichnet, daß
m = 0,05 - 1,0 und
n = 0,02 bis 2,75
beträgt. Diese sind herstellbar durch homogene Umsetzung eines wasserunlöslichen Celluloseäthers der allgemeinen Formel

Cell-(OZX)ₘ

in einem Gemisch von Dimethylacetamid und/oder N-Methylpyrrolidon mit Lithiumchlorid, wobei -Z-, -X und m die gleiche Bedeutung wie beim Endprodukt haben, wonach sich dann in bekannter Weise Hämodialysemembranen bilden lassen.

In einer anderen bevorzugten Ausführungsform sind die biokompatiblen Hämodialysemembranen dadurch gekennzeichnet, daß m = O und n = 1,0 bis 2,0 ist.

In einer weiteren erfindungsgemäßen Ausführungsform sind die biokompatiblen Hämodialysemembranen dadurch gekennzeichnet, daß m = 0,2 bis 0,6 und n = 0,2 bis 2,0 ist.

Das erfindungsgemäße Verfahren zur Herstellung der erfindungsgemäßen biokompatiblen Hämodialysemembranen ist dadurch gekennzeichnet, daß Cellulose und/oder ein entsprechender wasserunlöslicher Celluloseäther in Dimethylacetamid und/oder N-Methylpyrrolidon und/oder Wasser aktiviert und nach gegebenenfalls erfolgtem Austausch von Wasser durch Dimethylacetamid oder N-Methylpyrrolidon nach Zugabe von Lithiumchlorid gelöst wird, daß mit entsprechenden Anhydriden, Isocyanaten, Säurechloriden, Ketenen, Diketenen, Lactonen, Sultonen in an sich bekannter Weise umgesetzt wird und aus den Lösungen der erhaltenen Cellulosederivate entweder direkt oder nach deren Isolierung, Reinigung und Wiederauflösung in an sich bekannter Weise Hämodialysemembranen gebildet werden.

Vorzugsweise erfolgt die Aktivierung mit Dimethylacetamid und/oder N-Methylpyrrolidon bei 120 - 160 °C und das Lithiumchlorid wird nach Abkühlung auf unter 100 °C zugegeben.

Bei Verwendung von Wasser erfolgt die Aktivierung bei Temperaturen von 20 - 120 °C und das Wasser wird bei Umgebungstemperatur ausgetauscht.

Es wurde nämlich festgestellt, daß es möglich ist, zu deutlich höheren Konzentrationen an Cellulose in der Lösung zu gelangen, wenn zunächst die Cellulose beispielsweise in Dimethylacetamid oder N-Methylpyrrolidon bei 150 °C während einer halben Stunde aktiviert wird, wobei die in Dimethylacetamid suspendierte Cellulose beispielsweise innerhalb von 20 Minuten auf die gewünschte Temperatur aufgeheizt wird. Es ist auch möglich, die Cellulose dadurch zu aktivieren, daß sie zunächst in Wasser beispielsweise bei Raumtemperatur suspendiert wird und das Wasser anschließend gegen Dimethylacetamid ausgetauscht wird. Unter Stickstoff wird ein oxidativer Abbau der Cellulose weitgehend ausgeschlossen. Nach der Aktivierung wird das Lithiumchlorid beispielsweise bei ca. 100 °C zugesetzt, die Suspension rasch unter 50 °C abgekühlt und bis zum vollständigen Auflösen der Cellulose gerührt. Dabei muß der Wassergehalt der Lösung unter 2,2 % bleiben.

Bei dieser Herstellungsmethode der Lösung ist es möglich, je nach Polymerisationsgrad der eingesetzten Cellulose Konzentrationen von 5 bis 14 % zu verwenden, wobei zur Herstellung und Verarbeitung entweder Normalreaktoren oder Kneter Verwendung finden. Sowohl die in Dimethylacetamid/LiCl gelöste Cellulose, als auch die daraus hergestellten Derivatlösungen sind über längere Zeiten (Monate) stabil. Werden wasserunlösliche Celluloseäther in der beschriebenen Weise gelöst, lassen sich Lösungen mit Konzentrationen von bis zu 30 Gew.% herstellen.

Ein wesentlicher Vorteil der erfindungsgemäßen Celluloseester liegt darin, daß die erhaltenen Produkte hinsichtlich des Cellulosebausteines ein relativ hohes Molekulargewicht aufweisen. Trotz der hohen Molekulargewichte können hohe Konzentrationen ohne Schwierigkeiten hergestellt und verarbeitet werden.

In einer bevorzugten Ausführungsform des Verfahrens erfolgt die Umsetzung der Cellulosederivate in einem Gemisch aus 92 - 88 Gew.% Dimethylacetamid und/oder N-Methylpyrrolidon und 8 - 12 Gew.% Lithiumchlorid.

Bevorzugt beträgt bei der homogenen Umsetzung der Gewichtsanteil der Cellulose oder des wasserunlöslichen Celluloseäthers im Lösungsgemisch 5 Gew.% bis 30 Gew.%.

Aus den Lösungen der Derivate lassen sich direkt oder nach Isolierung, Reinigung und Wiederauflösung in an sich bekannter Weise ohne Schwierigkeiten Hämodialysemembranen herstellen. Eine Verwendung der Cellulosederivate besteht auch darin, daß man die Lösungen der erhaltenen Cellulosederivate im Gemisch mit Chitin und/oder Chitinderivaten und/oder Polyacrylnitril und/oder Polyamid zu Hämodialysemembranen verarbeitet, wobei das Gewicht des Cellulosederivates vorzugsweise 60 - 99, vorzugsweise 75 - 95 % des Gewichts des Gemisches beträgt.

Zur Herstellung der erfindungsgemäßen Hämodialysemembranen werden die Lösungen der erhaltenen Cellulosederivate vorzugsweise im Gemisch mit Cellulose verwendet, wobei das Gemisch vorzugsweise 1 bis 20 Gew.% des Cellulosederivates enthält.

Die neuen Hämodialysemembranen zeigen überraschende Eigenschaften. So gelingt es, bei Membranen für die Hämodialyse nachteilige Unverträglichkeiten des Patienten weitgehend aufzuheben.

Bei der Hämodialyse treten verschiedene Effekte auf, die auf die chemische Zusammensetzung der Membranen zurückgeführt werden, wobei die klinische Bedeutung dieser Effekte noch weitgehend ungeklärt ist. Als solche Effekte sind neben der Leukopenie die Komplementaktivierung und das Kapal-Tunnel-Syndrom bekannt geworden. Für die Reduzierung der Leukopenie und der Komplementaktivierung sind bereits modifizierte Dialysemembranen bekannt geworden, beispielsweise aus der DE-OS 35 24 596. Das Kapal-Tunnel-Syndrom wird durch die bekannten modifizierten Dialysemembranen nur wenig beeinflußt. Deshalb besteht ein erhebliches Bedürfnis nach weiteren Modifizierungen der Cellulose, um auch dieses Phänomen auszuschalten. Die erfindungsgemäßen Cellulosederivate haben sich bereits weitgehend als geeignet erwiesen, denn das das Kapal-Tunnel-Syndrom auslösende beta-2-Mikroglobulin wird an den erfindungsgemäßen Dialysemembranen so weitgehend adsorbiert, daß die Gefahr des Kapal-Tunnel-Syndroms weitgehend gebannt ist.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/mm³.

Die Leukopenie bei Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kindney International Vol. 24, Seite 764 ff, 1983 und D.E. Chenoweth, Asaio-Journal Vol. 7, Seite 44 ff, 1984.

Im Rahmen der vorliegenden Erfindung wurde die Komplement-Aktivierung anhand der Fragmente C3a oder C5a beurteilt. Dazu wurden in vitro 300 ml heparinisiertes Blutplasma über einen Zeitraum von 4 Std. mit einem Plasmafluß von 100 ml/min. durch einen Dialysator mit 1 m² effektiver Austauschfläche rezirkuliert. In dem Plasma wurden die C3a- oder C5a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C3a- oder C5a-Fragmente bestimmt.

Die Erhöhung des beta-2-Mikroglobulinspiegels bei Langzeit-Dialysepatienten wird nach Verwendung von Membranen aus regenerierter Cellulose beobachtet und wird darauf zurückgeführt, daß diese Membranen für Stoffe im Molekularbereich von 1000 bis 20.000 weniger durchlässig sind und letztere deshalb bei der Dialyse nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäßen Cellulosederivate beitragen.

Gemessen wird im Rahmen der Erfindung der beta-2-Mikroglobulinanteil, der an die Membran adsorbiert wird, auf folgende Weise.

In je 500 mg Substanz (Dialysemembran) werden 10 ml Humanblutplasma gegeben und 30 Min. bei 37 °C inkubiert. Das Humanblutplasma hat einen Gehalt an beta-2-Mikroglobulin von 13,67 mg/l. Die Probe wird bei 3000 Upm 15 Min. zentrifugiert. Im Überstand wird der Gehalt an beta-2-Mikroglobulin festgestellt. Anschließend wird die Probe 2 x mit je 10 ml Phosphat-buffer-saline gewaschen. In den Waschflüssigkeiten wird der Mikroglobulingehalt ebenfalls festgestellt. Aus der Differenz zwischen ursprünglichem und nicht absorbiertem beta-2-Mikroglobulin läßt sich die prozentuale Menge an absorbiertem beta-2-Mikroglobulin errechnen.

Der Durchschnittspolymerisationsgrad DP wurde in einer Cuen-Lösung nach DIN 54270 bestimmt.
Der Verätherungsgrad und/oder Veresterungsgrad wurden anhand der Analysenergebnisse bestimmt, die für die Substituenten bekannt und typisch sind, beispielsweise Stickstoff nach Kjeldahl, Schwefel nach Schöniger oder Phosphor nach der Molybdatmethode, gegebenenfalls aus der Differenz vor und nach einer Verseifung.

### Beispiel 1

In einem 2 l Dreihalskolben wurden 95,85 g (0,5 Mol) Diäthylaminoäthylcellulose (DS = 0,25; DP = 1170, gemessen im Lösungsmittel Cuen) in 1006,4 g (11,57 Mol) Dimethylacetamid suspendiert und bei 145 °C 30 Minuten lang unter Stickstoff aktiviert. Nach dem Abkühlen auf 100 °C wurden 95,8 g (2,25 Mol) LiCl zugesetzt, wobei die Temperatur um 5 - 10 °C anstieg; anschließend wurde rasch auf Raumtemperatur (RT stets 20 - 25 °C) abgekühlt und über Nacht gerührt. Zur klaren, viskosen Lösung wurden 6 g (0,06 Mol) Kaliumacetat (Katalysator) und 59,2 g (0,40 Mol) Phthalsäureanhydrid zugesetzt. Zur Vervollständigung der Reaktion wurde das Reaktionsgemisch 6 Stunden bei 65 °C und 15 Stunden bei Raumtemperatur weitergerührt. Die erhaltene Diäthylaminoäthylcellulosephthalatlösung wurde filtriert, entlüftet und zu Hohlfäden versponnen.

Als Lumenfüllung wurde i-Propylmyristat verwendet.

Die auf diese Weise erhaltenen Diäthylaminoäthylcellullosephthalat-Membranen wiesen folgende Eigenschaften auf:

| | |
|---|---|
| Diäthylaminoäthyl-Gruppengeh. | m = 0,24 |
| Phthalat-Gruppengehalt | n = 0,28 |
| Polymerisationsgrad (DP) | 1080 |
| Wanddicke | 14 µm |
| Innendurchmesser | 200 µm |
| Ultrafiltrationsrate | 4,0 ml /h.m².mm Hg bei 37°C |
| Vitamin B12 Permeabilität | 4,8.10⁻³ cm/min. bei 37 °C |
| Beta-2-Mikroglobulinadsorption | 50 % |

Die obengenannte Cellulosederivatmembran weist im Vergleich zu unmodifizierten Cellulose-Membranen eine geringere Komplementaktivierung auf. Gegenüber der unmodifizierten Cellulosemembran beträgt die C3a-Reduzierung 80 %.

### Beispiele 2 - 11

Analog dem Beispiel 1 wurden die in der Tabelle 1 aufgeführten Cellulosederivate hergestellt, zu Hohlfäden versponnen und ihre Dialyse- und Biokompatibilitätseigenschaften untersucht.

### Beispiele 12 - 14

Auf der Grundlage der Arbeitsweise von Beispiel 1 wurden die nachstehenden Cellulosederivate in DMAc/LiCl synthetisiert, zu Flachmembranen verarbeitet und ihre Komplementaktivierung anhand der Fragmente C3a bestimmt. Die Ergebnisse sind in Tabelle 2 zusammengestellt.

### Beispiele 15 - 19

Analog dem Beispiel 1 wurden verschiedene Cellulosederivate hergestellt, zu Hohlfäden versponnen, ihre Membranflußeigenschaften sowie ihre Komplementaktivierung anhand der Fragmente C5a ermittelt. Die Ergebnisse sind in der Tabelle 3 zusammengefaßt.

### Beispiele 20 - 39

Analog dem Beispiel 1 wurden die in der Tabelle 4 aufgeführten Celllulosederivate hergestellt, zu Flachmembranen verarbeitet und ihre Komplementaktivierung anhand der Fragmente C₅ₐ bestimmt. Die Ergebnisse sind in der Tabelle 4 zusammengestellt.

### Beispiel 40

In einem 2 l Dreihalskolben wurden 81 g (0,5 Mol) Cellulose (DP = 980, gemessen im Lösungsmittel Cuen) in 1000,5 g (11,50 Mol) Dimethylacetamid suspendiert und bei 150°C 30 Minuten lang unter Stickstoff aktiviert. Nach dem Abkühlen auf 100°C wurden 95,8 g (2,25 Mol) LiCl zugesetzt, wobei die Temperatur um 5 - 10°C anstieg; anschließend wurde rasch auf Raumtemperatur (RT stets 20 - 25°C) abgekühlt und über Nacht gerührt. Zur klaren, viskosen Lösung wurden 6 g (0,06 Mol) Kaliumacetat und 66,5 g (0,50 Mol) Dodecenylbernsteinsäureanhydrid zugesetzt. Zur Vervollständigung der Reaktion wurde das Reaktionsgemisch 8 Stunden bei 70°C gerührt und 15 Stunden bei Raumtemperatur weitergerührt. Die erhaltene Cellulosedodecenylsuccinatlösung wurde filtriert, entlüftet und zu Flachmembranen verarbeitet. Die Membranen wiesen einen DS von 0,35 und einen DP von 910 auf. Gegenüber der unmodifizierten Cellulosemembran betrug die C₅ₐ-Reduzierung 100 %.

### Beispiele 41 - 82

Analog dem Beispiel 1 bzw. 40 wurden aus Cellulose oder Celluloseethern die in der Tabelle 5 (Beispiele 41 - 53), Tabelle 6 (Beispiele 54 - 72) und Tabelle 7 (Beispiele 73 -82) aufgeführten Cellulosederivate synthetisiert, zu Flachmembranen verarbeitet, ihre Komplementaktivierung anhand der Fragmente C₅ₐ und ihre Beta-2-Microglobulinadsorption bestimmt. Die Ergebnisse sind in den Tabellen 5, 6 und 7 zusammengestellt.

### Beispiel 83

In einem 2 l Dreihalskolben wurden 97,33 g (0,50 Mol) Diethylaminoethylcellulose (DS = 0,33; DP = 1040, gemessen im Lösungsmittel Cuen) in 1000,5 g (11,50 Mol) Dimethylacetamid suspendiert und bei 145°C 30 Minuten lang unter Stickstoff aktiviert. Nach dem Abkühlen auf 100°C wurden 97,61 g (2,3 Mol) LiCl zugesetzt, wobei die Temperatur um 5 - 10°C anstieg; anschließend wurde rasch auf Raumtemperatur (Raumtemperatur stets 20 - 25°C) abgekühlt und über Nacht gerührt.

Zur klaren, viskosen Lösung wurden 12 g (0,15 Mol) Pyridin (Katalysator) und 83,3 g (0,70 Mol) Phenylisocyanat zugesetzt. Zur Vervollständigung der Reaktion wurde das Reaktionsgemisch 8 Stunden bei Raumtemperatur weitergerührt. Die erhaltene Diethylaminoethylcellulosephenylcarbamatlösung wurde filtriert, entlüftet und zu Flachmembranen verarbeitet.

Die auf diese Weise erhaltenen Membranen wiesen folgende Eigenschaften auf:

| | |
|---|---|
| Diethylaminoethyl-Gruppengeh. | m = 0,32 |
| Phenylcarbamat-Gruppengeh. | n = 0,52 |
| Polymerisationsgrad (DP) | 970 |

Im Vergleich zur unmodifizierten Cellulose beträgt die C₅ₐ-Reduktion 100 %.

### Beispiele 84 - 100

Auf der Grundlage der Arbeitsweise von Beispiel 83, 40 und 1 wurden die in der Tabelle 8 aufgeführten Cellulosederivate synthetisiert, zu Flachmembranen verarbeitet, ihre Komplementaktivierung anhand der Fragmente C₅ₐ sowie bei einigen Derivaten die Beta-2-Microglobulinadsorption bestimmt. Die Ergebnisse sind in der Tabelle 8 zusammengestellt.

### Beispiele 101 - 109

Durch Umsetzung von Cellulose oder Celluloseethern in DMAc/LiCl mit Thiocyanaten, Thiosäurechloriden, Sulfonsäurechloriden, Chlorameisensäureestern oder SO₃-Pyridin-Komplex in Gegenwart von Pyridin wurden die in der Tabelle 9 aufgeführten Derivate synthetisiert und ihre Brokompatibilitätseigenschaften untersucht. Die Ergebnisse sind in der Tabelle 9 zusammengestellt.

### Beispiele 110 - 119

In der Tabelle 10 sind Beispiele von Mischmembranen aufgeführt, die aus Dimethylacetamid/LiCl-Lösungen nach folgender Verfahrensweise hergestellt wurden:
a. durch Mischung von in DMAc/LiCl hergestellten Cellulosederivaten
b. durch Mischung von in DMAc/LiCl hergestellten Cellulosederivaten mit handelsüblichen Cellulosederivaten
c. durch Mischung von in DMAc/LiCl hergestellten Cellulosederivaten mit einem natürlichen oder synthetischen Polymer

Die im Vergleich zu unmodifizierter Cellulose ermittelten C₅ₐ-Reduktionswerte sind in der Tabelle 10 zusammengestellt.

### Beispiele 120 - 126

Da im Lösungsmittelsystem DMAc/LiCl bzw. NMP/LiCl außer Cellulose und Cellulosederivaten auch andere natürliche oder synthetische Polymere wie Chitin, PAN, PA und andere gut löslich sind, kann man eine Vielzahl von unterschiedlich zusammengesetzten Mischmembranen herstellen.

Analog dem Beispiel 1 wurden verschiedene Cellulosederivate synthetisiert, mit Chitin, PAN oder PA vermischt und zu Hohlfäden versponnen. Die auf diese Weise erhaltenen Membranen wiesen die in der Tabelle 11 zusammengestellten Eigenschaften auf.

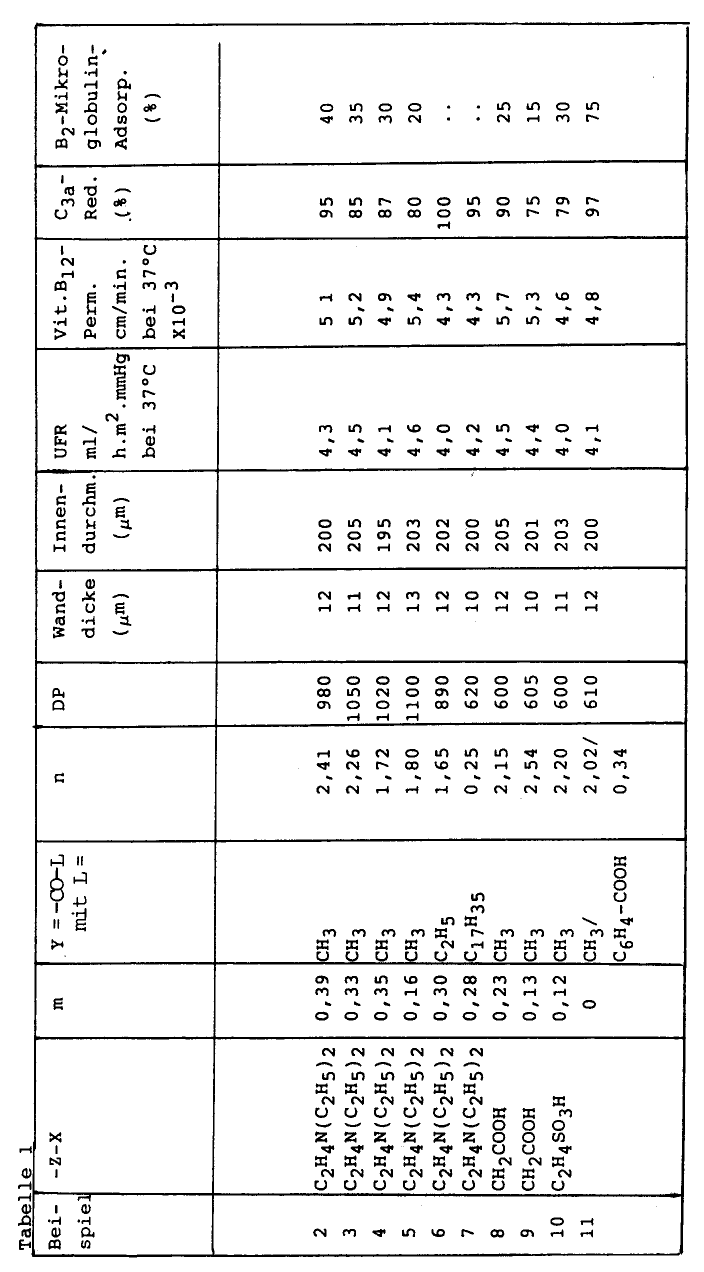

**Tabelle 2**

| Beispiel | m | Y = -CO-L mit L = | n | DP | C3a-Reduzierung % |
|---|---|---|---|---|---|
| 12 | 0 | CH₃ | 1,60 | 830 | 55 |
| 13 | 0 | C₃H₇ | 2,50 | 620 | 90 |
| 14 | 0 | C₆H₅NH | 2,50 | 840 | 50 |

**Tabelle 3**

| Beispiel | m | Y=-CO-L mit L= | n | DP | Wanddicke (µm) | Innendurchm. (µm) | UFR ml/h.m².mm Hg bei 37 °C | Vit. B12-Perm. cm/min. bei 37 °C X 10⁻³ | C₅ₐ-Red. % |
|---|---|---|---|---|---|---|---|---|---|
| 15 | 0 | CH₃ | 1,71 | 605 | 8 | 205 | 34,1 | 14,8 | 40 |
| 16 | 0 | CH₃ | 1,86 | 1650 | 10 | 200 | 4,5 | 5,2 | 45 |
| 17 | 0 | C₂H₅ | 1,78 | 610 | 11 | 220 | 4,2 | 4,7 | 100 |
| 18 | 0 | C₂H₅ | 2,20 | 620 | 8 | 210 | 25,4 | 12,3 | 95 |
| 19 | 0 | CH₂=C(CH₃) | 1,60 | 750 | 12 | 205 | 4,8 | 5,3 | 50 |

**Tabelle 4**

| Beispiel | m | y = -CO-L mit L = | n | DP | C₅ₐ-Red. (%) |
|---|---|---|---|---|---|
| 20 | 0 | C₂H₅ | 1,51 | 940 | 81 |
| 21 | 0 | C₂H₅ | 1,96 | 890 | 100 |
| 22 | 0 | C₃H₇ | 1,20 | 1050 | 100 |
| 23 | 0 | C₁₁H₂₃ | 0,75 | 970 | 85 |
| 24 | 0 | C₁₇H₃₅ | 0,06 | 1060 | 100 |
| 25 | 0 | C₁₇H₃₅ | 0,12 | 1010 | 100 |
| 26 | 0 | C₁₇H₃₅ | 0,14 | 870 | 98 |
| 27 | 0 | C₁₇H₃₃ | 0,35 | 790 | 70 |
| 28 | 0 | C₆H₅ | 1,46 | 780 | 85 |
| 29 | 0 | C₆H₅ | 1,00 | 860 | 95 |
| 30 | 0 | C₆H₅-CH₂ | 0,67 | 1010 | 85 |
| 31 | 0 | CH₂=CH | 1,75 | 950 | 65 |
| 32 | 0 | C₁₇H₃₅COCH(C₁₆H₃₃) | 0,04 | 1060 | 100 |
| 33 | 0 | CH₃/C₂H₅ | 0,80/1,70 | 650 | 100 |
| 34 | 0 | CH₃/C₂H₅ | 1,10/0,85 | 620 | 97 |
| 35 | 0 | C₂H₅/C₃H₇ | 1,30/1,05 | 610 | 98 |
| 36 | 0 | C₂H₅/C₃H₇ | 1,65/0,35 | 615 | 100 |
| 37 | 0 | CH₃/C₁₈H₃₇NHC₆H₄ | 1,90/0,07 | 600 | 93 |
| 38 | 0 | CH₃/C₁₈H₃₅ | 1,80/0,14 | 610 | 99 |
| 39 | 0 | CH₃/C₂F₅ | 1,20/0,80 | 605 | 86 |

**Tabelle 5**

| Beispiel | m | Y = -CO-L mit L = | n | DP | C₅ₐ-Red. (%) | Beta-2-Microgl.-ads (%) |
|---|---|---|---|---|---|---|
| 41 | 0 | HOOCCH=CH | 0,09 | 640 | 70 | 15 |
| 42 | 0 | HOOCC₂H₄ | 0,08 | 650 | 65 | 14 |
| 43 | 0 | HOOCC₆H₄ | 0,40 | 610 | 88 | 65 |
| 44 | 0 | HOOC(CH₂)₈ | 0,25 | 950 | 92 | 47 |
| 45 | 0 | C₁₁H₂₃CH^=C(CH₂COOH) | 0,17 | 890 | 100 | 38 |
| 46 | 0 | C₁₁H₂₃CH=C(CH₂COOH) | 0,58 | 630 | 100 | 72 |
| 47 | 0 | C₁₁H₂₃CH=C(CH₂COOH) | 0,09 | - | 100 | - |
| 48 | 0 | CH₃/HOOCC₂H₄ | 1,96/0,08 | 680 | 90 | - |
| 49 | 0 | CH₃/C₁₁H₂₃CH=C(CH₂COOH) | 1,95/0,07 | 630 | 98 | 25 |
| 50 | 0 | CH₃/HOOCC₆H₄ | 1,80/0,35 | 605 | 96 | 70 |
| 51 | 0 | CH₃/HOOCCH(SO₃H)CH₂ | 1,90/0,08 | 615 | 99 | 38 |
| 52 | 0 | C₂H₅/HOOCCH(Cl)CH₂ | 1,87/0,09 | 625 | 98 | 18 |
| 53 | 0 | C₁₁H₂₃(OCH(C₁₀H₂₁)/HOOCC₆H₄ | 0,08/0,30 | 650 | 100 | 60 |

**Tabelle 6**

| Beispiel | -Z-X | m | Y = -CO-L mit L = | A | DP | C₅ₐ Red. (%) | Beta-2-Microglobulinads. (%) |
|---|---|---|---|---|---|---|---|
| 54 | C₂H₄-N(C₂H₅)₂ | 0,33 | CH₃ | 2,26 | 850 | 100 | - |
| 55 | C₂H₄-N(C₂H₅)₂ | 0,25 | C₁₇H₃₅ | 0,10 | 1120 | 100 | - |
| 56 | C₂H₄-N(C₂H₅)₂ | 0,35 | C₁₇H₃₃ | 0,15 | 1090 | 100 | - |
| 57 | C₂H₄-N(C₂H₅)₂ | 0,20 | C₁₇H₃₅COCH(C₁₆H₃₃) | 0,05 | 1150 | 100 | - |
| 58 | C₂H₄-N(C₂H₅)₂ | 0,10 | HOOCCH=CH | 0,10 | 1040 | 92 | 30 |
| 59 | C₂H₄-N(C₂H₅)₂ | 0,33 | HOOC-C₆H₄ | 0,28 | 1020 | 100 | 55 |
| 60 | C₂H₄-N(C₂H₅)₂ | 0,30 | C₁₁H₂₃CH=C(CH₂COOH) | 0,40 | 1090 | 100 | 65 |
| 61 | C₂H₄-N(C₂H₅)₂ | 0,20 | HOOC-(CH₂)₈ | 0,21 | 1010 | 100 | 50 |
| 62 | C₂H₄-N(i-C₃H₇)₂ | 0,10 | C₃H₇ | 1,20 | 1120 | 98 | - |
| 63 | C₂H₄-N(C₁₂H₂₅)₂ | 0,08 | C₂H₅ | 1,80 | 1040 | 100 | - |
| 64 | C₂H₄-N(C₁₈H₃₇)₂ | 0,05 | CH₃/C₂H₅ | 0,8/1,15 | 1010 | 95 | - |
| 65 | C₂H₄-N(C₁₂H₂₄OH) | 0,13 | C₆H₅ | 0,80 | 1130 | 98 | - |
| 66 | C₂H₄-N(CH₂C₆H₅)₂ | 0,20 | HOOCC₃H₆ | 0,25 | 980 | 97 | 47 |
| 67 | C₂H₄-NC₅H₁₀ | 0,10 | C₂H₅ | 1,60 | 1050 | 100 | - |
| 68 | C₂H₄-NC₄H₈O | 0,15 | C₁₈H₃₇OCOCH=CH | 0,12 | 1060 | 90 | - |
| 69 | C₂H₄CN | 0,60 | CH₃ | 1,68 | 880 | 85 | - |
| 70 | C₂H₄-SO₃H | 0,05 | C₁₁H₂₃ | 0,60 | 960 | 95 | 20 |
| 71 | C₂H₄-SO₂C₁₂H₂₅ | 0,10 | HOOCCH(SO₃H)CH₂ | 0,27 | 790 | 100 | 70 |
| 72 | C₂H₄-PO₃H₂ | 0,08 | C₁₇H₃₃ | 0,20 | 640 | 92 | 29 |

**Tabelle 7**

| Beispiel | -Z-X | m | Y = -CO-L mit L = | n | DP | C₅ₐ-Red. (%) | Beta-2-Microglobulin ads. (%) | |
|---|---|---|---|---|---|---|---|---|
| 73 | CH₂COOH | 0,09 | CH₃ | 2,74 | 630 | 85 | 15 | 15 |
| 74 | CH₂PO₃H₂ | 0,13 | CH₃ | 1,87 | 605 | 82 | 35 | 35 |
| 75 | C₃H₆SO₃H | 0,11 | C₂H₅ | 1,75 | 610 | 100 | 25 | 25 |
| 76 | C₃H₆SI(OCH₃)₃ | 0,08 | C₁₅H₃₁CH=C(CH₂COOH) | 0,35 | 700 | 100 | 60 | 60 |
| 77 | C₁₂H₂₄(OH) | 0,30 | HOOC-C₆H₄ | 0,25 | 1040 | 96 | 64 | 64 |
| 78 | C₁₈H₃₇ | 0,08 | HOOCC₂H₄ | 0,20 | 870 | 100 | 32 | 32 |
| 79 | CH₂OC₁₆H₃₃ | 0,07 | C₃H₇ | 1,00 | 920 | 100 | - | - |
| 80 | CH₂C₆H₅ | 0,70 | CH₃ | 1,45 | 1050 | 80 | - | - |
| 81 | CH₂-CH=CH₂ | 0,35 | CH₃ | 1,55 | 940 | 82 | - | - |
| 82 | (CH₂)₉COOH | 0,10 | C₂H₅ | 1,65 | 850 | 98 | 37 | 37 |

**Tabelle 8**

| Beispiel | m | y = -CO-L mit L = | n | DP | C₅ₐ-Red. (%) | Beta-2-Microglobulinads. (%) |
|---|---|---|---|---|---|---|
| 84 | 0 | C₄H₉NH | 0,53 | 1070 | 100 | - |
| 85 | 0 | C₄H₉NH | 0,77 | 630 | 99 | - |
| 86 | 0 | C₄H₉NH | 1,62 | 720 | 85 | - |
| 87 | 0 | C₆H₅NH | 0,91 | 1040 | 95 | - |
| 88 | 0 | C₆H₅NH | 1,61 | 770 | 92 | - |
| 89 | 0 | C₆H₅NH | 1,85 | 690 | 90 | - |
| 90 | 0 | C₆H₄(CH₃)NH | 0,93 | 890 | 92 | - |
| 91 | 0 | C₆H₁₁NH | 1,17 | 840 | 97 | - |
| 92 | 0 | CH₃/C₄H₉NH | 1,85/0,43 | - | 86 | - |
| 93 | 0 | HOOCC₂H₄/C₆H₅NH | 0,23/0,90 | - | 100 | 35 |
| 94 | 0 | C₁₁H₂₃CH=C(CH₂COOH)/C₆H₅NH | 0,25/0,90 | - | 100 | 50 |
| 95 | 0 | HOOCC₆H₄/C₆H₅NH | 0,30/1,20 | - | 100 | 68 |
| 96 | 0 | C₁₈H₃₇NH | 0,10 | - | 100 | - |
| 97 | 0 | C₆H₄(Cl)NH | 0,80 | - | 79 | - |
| 98 | 0 | HOOCCH=CH/C₆H₄(CH₃)NH | 0,30/1,10 | - | 100 | 43 |
| 99 | 0 | C₄H₉NH/C₆H₅NH | 0,43/0,85 | - | 100 | - |
| 100 | 0 | C₂H₅/C₆H₄(CH₃)NH | 1,50/0,90 | - | 98 | - |

**Tabelle 9**

| Beispiel | -Z-X | m | Y | n | DP | C₅ₐ-Red. (%) | Beta-2-Microglobulin ads. (%) |
|---|---|---|---|---|---|---|---|
| 101 | - | 0 | C₄H₉NHCS | 0,40 | 725 | 84 | - |
| 102 | - | 0 | C₆H₅NHCS | 0,70 | 660 | 89 | - |
| 103 | C₂H₄-N(C₂H₅)₂ | 0,25 | C₆H₅NHCS | 0,65 | 650 | 96 | - |
| 104 | - | 0 | C₂H₅OCO | 0,45 | 640 | 65 | - |
| 105 | - | 0 | C₁₈H₃₇OCO | 0,10 | 670 | 97 | - |
| 106 | - | 0 | C₂H₅CS | 1,40 | 710 | 85 | - |
| 107 | CH₂-C₆H₅ | 1,60 | SO₃H | 0,10 | 605 | 93 | 28 |
| 108 | - | 0 | C₁₂H₂₅SO₂ | 0,15 | 680 | 75 | - |
| 109 | C₂H₄-N(C₂H₅)₂ | 0,30 | C₁₈H₃₇N(CH₃)SO₂ | 0,07 | 620 | 100 | |

**Tabelle 10**

| Beispiel | Polymer A | Polymer B | Mischungsverhältnis | C₅ₐ-Red. (%) |
|---|---|---|---|---|
| 110 | Cellulose-1,80-acetat | Cellulose-1,75-propionat | 30:70 | 95 |
| 111 | Cellulose-1,80-acetat | Cellulose-1,60-butyrat | 20:80 | 94 |
| 112 | Celllulose-1,80-acetat | Cellulose-0,53-butylcarbamat | 20:80 | 100 |
| 113 | Cellulose | Cellulose-0,35-dodecenylsuccinat | 80:20 | 100 |
| 114 | Diethylaminoethyl-0,10-Cellulose | Cellulose-0,15-maleinat | 20:80 | 96 |
| 115 | Cellulose-0,198-maleinat | Cellulose-0,91-phenylcarbamat | 50:50 | 98 |
| 116 | Polyacrylnitril | Cellulose-1,85-phenylcarbamat | 25:75 | 93 |
| 117 | Polyamid | Cellulose-0,40-phthalat | 20:80 | 100 |
| 118 | Chitin | Cellulose-0,20-stearat | 20:80 | 100 |
| 119 | Polyacrylnitril | Cellulose-0,35-hexadecenylsucinat | 25:75 | 100 |

**Tabelle 11**

| Beispiel | Polymerzusammensetzung | Wanddicke (µm) | Innendurchm. (µm) | UFR ml/h.m².mm Hg bei 37 °C |
|---|---|---|---|---|
| 120 | Cellulose-0,08-acetat Chitin (3:1) | 13 | 180 | 7,2 |
| 121 | Cellulose-0,08-acetat/PAN (3:1) | 10 | 215 | 8,5 |
| 122 | Cellulose-0,08-acetat/PA (3:1) | 12 | 200 | 8,3 |
| 123 | Cellulose-0,7-acetat/PAN (1:3) | 10 | 195 | 4,8 |
| 124 | Cellulose-0,2-succinat/PAN (1:3) | 11 | 220 | 4,3 |
| 125 | Cellulose-0,35-butylcarbamat/PAN (3:1) | 13 | 225 | 6,9 |
| 126 | Cellulose-1,71-acetat/PAN (1:3) | 12 | 240 | 4,1 |

## Patentansprüche

1. Biokompatible Hämodialysemembranen aus modifizierter Cellulose, dadurch gekennzeichnet, daß sie aus einer modifizierten Cellulose einer durch die Formel 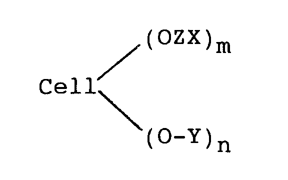 wiedergegebenen Struktur bestehen, worin
-Z- einen geradkettigen oder verzweigten Alkylen- und/oder Alkenylenrest und/oder einen Cycloalkylen- und/oder Arylen- und/oder Aralkylenrest und/oder den Rest einer gegebenenfalls substituierten heterocyclischen Verbindung darstellt,
X -H und/oder -NR₂ und/oder -N⁺R₃ und/oder -COOR und/oder -CO-NR₂ und/oder -CO-R und/oder -CS-R und/oder SO₃-R und/oder -SO₂-R und/oder -SO₂NR₂ und/oder -SR und/oder -PO(OR)₂ und/oder -PO(NR₂)₂ und/oder -CN und/oder -OR und/oder Halogen und/oder -Si(OR)₃ bedeutet, worin
R ein Wasserstoffatom und/oder eine geradkettige oder verzweigte Alkyl- und/oder Alkenylgruppe mit 1 bis 25 C-Atomen und/oder eine Cycloalkyl- und/oder Tolyl- und/oder Benzyl- und/oder Phenylgruppe ist, bei R=H eine Säuregruppe in X in den Fällen -COOH, -SO₃H und -PO₃H₂ auch in Salzform vorliegen kann und die organischen Reste R gegebenenfalls substituiert sein können,
Y die Reste -CO-R'' und/oder -CO-NHR'' und/oder -CO-NR''₂ und/oder -CS-R' und/oder -CO-OR' und/oder -CS-NR'₂ und/oder -SO₂-OR' und/oder -SO₂-R' und/oder -SO₂NR'₂ und/oder -PO(OR')₂ darstellen,
R' einen geradkettigen oder verzweigten Alkyl- und/oder Alkenylrest mit 1 - 36 C-Atomen und/oder einen Cycloalkyl- und/oder Aryl- und/oder Arylalkylrest und/oder H darstellt, wobei bei R' = H die Säuregruppe in Y in dem Fall -PO₃H₂ auch in Salzform vorliegen kann und die organischen Reste R' gegebenenfalls substituiert sein können,
R'' mit Ausnahme von H die gleiche Bedeutung wie R' besitzt,
m = 0-2,5,
n = 0,01 bis 2,95 ist,
und der in einer Cuen-Lösung nach DIN 54270 bestimmte Durchschnittspolymerisationsgrad > 600 bis 1650 ist.

2. Biokompatible Hämodialysemembranen nach Anspruch 1, dadurch gekennzeichnet, daß Y einen -CO-R''-Rest darstellt, in dem R'' einen Alkylrest mit 1 - 4 C-Atomen und/oder einen (CH₂)ᵣ-COOH-Rest mit r = 1 oder 2 bedeutet, m = O und n ≦ 0,40 oder ≧ 0,80 ist.

3. Biokompatible Hämodialysemembranen nach Anspruch 1, dadurch gekennzeichnet, daß
m = 0,05 - 1,0 und
n = 0,02 bis 2,75
beträgt.

4. Biokompatible Hämodialysemembranen nach einem der Ansprüche 1 oder 2, dadurch gekennzeichnet, daß
m = O und
n = 1,0 bis 2,0
ist.

5. Biokompatible Hämodialysemembranen nach einem der Ansprüche 1 oder 3, dadurch gekennzeichnet, daß
m = 0,2 bis 0,6 und
n = 0,2 bis 2,0
ist.

6. Verfahren zur Herstellung der biokompatiblen Hämodialysemembranen nach einem oder mehreren der Ansprüche 1 bis 5, dadurch gekennzeichnet, daß Cellulose und/oder ein entsprechender wasserunlöslicher Celluloseäther in Dimethylacetamid und/oder N-Methylpyrrolidon und/oder Wasser aktiviert und nach gegebenenfalls erfolgtem Austausch von Wasser durch Dimethylacetamid oder N-Methylpyrrolidon nach Zugabe von Lithiumchlorid gelöst wird, daß mit entsprechenden Anhydriden, Isocyanaten, Säurechloriden, Ketenen, Diketenen, Lactonen, Sultonen in an sich bekannter Weise umgesetzt wird und aus den Lösungen der erhaltenen Cellulosederivate entweder direkt oder nach deren Isolierung, Reinigung und Wiederauflösung in an sich bekannter Weise Hämodialysemembranen gebildet werden.

7. Verfahren nach Anspruch 6, dadurch gekennzeichnet, daß die Aktivierung mit Dimethylacetamid und/oder N-Methylpyrrolidon bei 120 - 160 °C erfolgt und das Lithiumchlorid nach Abkühlung auf unter 100 °C zugegeben wird.

8. Verfahren nach Anspruch 6, dadurch gekennzeichnet, daß die Aktivierung mit Wasser bei Temperaturen von 20 - 120 °C erfolgt und das Wasser bei Umgebungstemperatur ausgetauscht wird.

9. Verfahren nach einem oder mehreren der Ansprüche 6 bis 8, dadurch gekennzeichnet, daß die Cellulosederivate durch Umsetzung in einem Gemisch aus 92 - 88 Gew.% Dimethylacetamid und/oder N-Methylpyrrolidon und 8 - 12 Gew.% Lithiumchlorid hergestellt werden.

10. Verfahren nach einem oder mehreren der Ansprüche 6 bis 9, dadurch gekennzeichnet, daß bei der homogenen Umsetzung der Gewichtsanteil der Cellulose oder des wasserunlöslichen Celluloseäthers im Lösungsgemisch 5 Gew.% bis 30 Gew.% beträgt.

11. Verfahren nach einem oder mehreren der Ansprüche 6 bis 10, dadurch gekennzeichnet, daß man die Lösungen der erhaltenen Cellulosederivate im Gemisch mit Chitin und/oder Chitinderivaten und/oder Polyacrylnitril und/oder Polyamid zu Hämodialysemembranen verarbeitet.

12. Verfahren nach Anspruch 11, dadurch gekennzeichnet, daß das Gewicht des Cellulosederivates 60 - 99, vorzugsweise 75 - 95 % des Gewichts des Gemisches beträgt.

13. Verfahren nach einem oder mehreren der Ansprüche 6 bis 10, dadurch gekennzeichnet, daß man die Lösungen der erhaltenen Cellulosederivate im Gemisch mit Cellulose zu Hämodialysemembranen verarbeitet.

14. Verfahren nach Anspruch 13, dadurch gekennzeichnet, daß das Gemisch 1 bis 20 Gew.% des Cellulosederivates enthält.

## Claims

1. Biocompatible haemodialysis membranes made from modified cellulose, characterised in that they consist of a modified cellulose having a structure represented by the formula 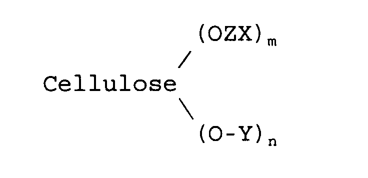 wherein
-Z- represents a straight-chain or branched alkylene and/or alkenylene radical and/or a cycloalkylene and/or arylene and/or aralkylene radical and/or the radical of an optionally substituted heterocyclic compound,
X signifies -H and/or -NR₂ and/or -N⁺R₃ and/or -COOR and/or -CO-NR₂ and/or -CO-R and/or -CS-R and/or SO₃-R and/or SO₂-R and/or -SO₂NR₂ and/or -SR and/or -PO(OR)₂ and/or -PO(NR₂)₂ and/or -CN and/or -OR and/or halogen and/or -Si(OR)₃, wherein
R is a hydrogen atom and/or a straight-chain or branched alkyl and/or alkenyl group having 1 to 25 C atoms and/or a cycloalkyl and/or tolyl and/or benzyl and/or phenyl group, when R equals H an acidic group in X in the cases -COOH, -SO₃H and -PO₃H₂ can also be present in salt form and the organic radicals R can optionally be substituted,
Y represents the radicals -CO-R'' and/or -CO-NHR'' and/or -CO-NR''₂ and/or -CS-R' and/or -CO-OR' and/or -CS-NR'₂ and/or -SO₂-OR' and/or -SO₂-R' and/or -SO₂NR'₂ and/or -PO(OR')₂,
R' represents a straight-chain or branched alkyl and/or alkenyl radical having 1 to 36 C atoms and/or a cycloalkyl and/or aryl and/or arylalkyl radical and/or H, wherein when R' equals H the acidic group in Y in the case -PO₃H₂ can also be present in salt form and the organic radicals R' can optionally be substituted,
R'' with the exception of H, has the same meaning as R',
m = 0 to 2.5,
n = 0.01 to 2.95,
and the average degree of polymerisation, determined in a cuen solution in accordance with DIN 54270, is > 600 up to 1650.

2. Biocompatible haemodialysis membranes according to claim 1, characterised in that Y represents a -CO-R'' radical, wherein R'' signifies an alkyl radical having 1 to 4 C atoms and/or a (CH₂)ᵣ-COOH radical having r = 1 or 2, m = 0 and n ≦ 0.40 or ≧ 0.80.

3. Biocompatible haemodialysis membranes according to claim 1, characterised in that
m = 0.05 to 1.0 and
n = 0.02 to 2.75.

4. Biocompatible haemodialysis membranes according to one of claims 1 or 2, characterised in that
m = 0 and
n = 1.0 to 2.0.

5. Biocompatible haemodialysis membranes according to one of claims 1 or 3, characterised in that
m = 0.2 to 0.6 and
n = 0.2 to 2.0.

6. Method for the preparation of biocompatible haemodialysis membranes according to one or more of claims 1 to 5, characterised in that cellulose and/or an appropriate water-insoluble cellulose ether is activated in dimethylacetamide and/or N-methylpyrrolidone and/or water and after the exchange, if necessary, of water by dimethylacetamide or N-methylpyrrolidone has been effected, is dissolved after addition of lithium chloride, in that reaction is carried out in a known per se manner using appropriate anhydrides, isocyanates, acid chlorides, ketenes, diketenes, lactones, sultones, and haemodialysis membranes are formed in a known per se manner from the solutions of the cellulose derivatives obtained, either directly or after isolation, purification and redissolution thereof.

7. Method according to claim 6, characterised in that the activation using dimethylacetamide and/or N-methylpyrrolidone is carried out at 120 to 160°C and the lithium chloride is added after cooling to below 100°C.

8. Method according to claim 6, characterised in that the activation using water is carried out at temperatures of from 20 to 120°C and the water is exchanged at ambient temperature.

9. Method according to one or more of claims 6 to 8, characterised in that the cellulose derivatives are prepared by reaction in a mixture of 92 to 88 wt.% of dimethylacetamide and/or N-methylpyrrolidone and 8 to 12 wt.% of lithium chloride.

10. Method according to one or more of claims 6 to 9, characterised in that during the homogeneous reaction the percentage by weight of the cellulose or of the water-insoluble cellulose ether contained mixed in the solution is from 5 wt.% to 30 wt.%.

11. Method according to one or more of claims 6 to 10, characterised in that the solutions of the cellulose derivatives obtained mixed with chitin and/or chitin derivatives and/or polyacrylonitrile and/or polyamide are processed into haemodialysis membranes.

12. Method according to claim 11, characterised in that the weight of the cellulose derivative amounts to 60 to 99%, preferably 75 to 95%, of the weight of the mixture.

13. Method according to one or more of claims 6 to 10, characterised in that the solutions of the cellulose derivatives obtained mixed with cellulose are processed into haemodialysis membranes.

14. Method according to claim 13, characterised in that the mixture contains from 1 to 20 wt% of the cellulose derivative.

## Revendications

1. Membranes biocompatibles d'hémodialyse à base de cellulose modifiée, caractérisées en ce qu'elles sont constituées d'une cellulose modifiée qui présente la structure représentée par la formule 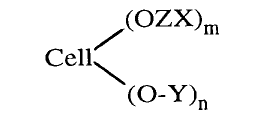 dans laquelle
-Z- représente un reste alkylène et/ou alcénylène à chaîne droite ou ramifiée et/ou un reste cycloalkylène et/ou arylène et/ou aralkylène et/ou le reste d'un composé hétérocyclique, portant éventuellement des substituants,
X représente -H et/ou -NR₂ et/ou -N⁺R₃ et/ou -CO-OR et/ou -CO-NR₂ et/ou -CO-R et/ou -CS-R et/ou -SO₃-R et/ou -SO₂-R et/ou -SO₂-NR₂ et/ou -SR et/ou -PO(OR)₂ et/ou -PO(NR₂)₂ et/ou -CN et/ou -OR et/ou -Si(OR)₃ et/ou un atome d'halogène , où
R représente un atome d'hydrogène et/ou un groupe alkyle et/ou alcényle à chaîne droite ou ramifiée, comportant de 1 à 25 atomes de carbone, et/ou un groupe cycloalkyle et/ou tolyle et/ou benzyle et/ou phényle, certains groupes acides que X peut représenter quand R = H, c'est-à-dire les groupes -COOH, -SO₃H et -PO₃H₂, pouvant aussi se trouver sous forme salifiée, et les restes organiques symbolisés par R pouvant éventuellement porter des substituants,
Y représente -CO-R'' et/ou -CO-NHR'' et/ou -CO-NR''₂ et/ou -CS-R' et/ou -CO-OR' et/ou -CS-NR'₂ et/ou -SO₂-OR' et/ou -SO₂-R' et/ou -SO₂-NR'₂ et/ou -PO(OR')₂,
R' représente un atome d'hydrogène et/ou un groupe alkyle et/ou alcényle à chaîne droite ou ramifiée, comportant de 1 à 36 atomes de carbone, et/ou un groupe cycloalkyle et/ou aryle et/ou aralkyle, l'un des groupes acides que Y peut représenter quand R' = H, c'est-à-dire le groupe -PO₃H₂, pouvant aussi se trouver sous forme salifiée, et les restes organiques symbolisés par R' pouvant éventuellement porter des substituants,
R'' a les mêmes significations que R', à l'exception de celle d'un atome d'hydrogène,
m vaut de 0 à 2,5, et
n vaut de 0,01 à 2,95,
et dont le degré de polymérisation, déterminé en solution dans le complexe cuivre-éthylènediamine "Cuen", selon la norme DIN 54270, vaut de plus de 600 à 1650.

2. Membranes biocompatibles d'hémodialyse, conformes à la revendication 1, caractérisées en ce que Y représente un reste -CO-R'', où R'' représente un groupe alkyle comportant de 1 à 4 atomes de carbone et/ou un reste -(CH₂)ᵣ-COOH où r vaut 1 ou 2, m est nul et n est inférieur ou égal à 0,4, ou supérieur ou égal à 0,80.

3. Membranes biocompatibles d'hémodialyse, conformes à la revendication 1, caractérisées en ce que m vaut de 0,05 à 1,0 et n vaut de 0,02 à 2,75.

4. Membranes biocompatibles d'hémodialyse, conformes à la revendication 1 ou 2, caractérisées en ce que m est nul et n vaut de 1,0 à 2,0.

5. Membranes biocompatibles d'hémodialyse, conformes à la revendication 1 ou 3, caractérisées en ce que m vaut de 0,2 à 0,6 et n vaut de 0,2 à 2,0.

6. Procédé de fabrication de membranes biocompatibles d'hémodialyse, conformes à l'une ou plusieurs des revendications 1 à 5, caractérisé en ce que l'on active de la cellulose et/ou un éther de cellulose correspondant, insoluble dans l'eau, dans du diméthylacétamide et/ou de la N-méthyl-pyrrolidone et/ou de l'eau, et, après remplacement éventuel de l'eau par du diméthylacétamide ou de la N-méthyl-pyrrolidone, on la et/ou le dissout après avoir ajouté du chlorure de lithium, et en ce qu'on la et/ou le fait réagir, de façon connue, avec des anhydrides, isocyanates, chlorures d'acide, cétènes, dicétènes, lactones et/ou sultones correspondants, et l'on fabrique des membranes d'hémodialyse, de manière connue, à partir des solutions des dérivés de cellulose ainsi obtenus, soit directement, soit après avoir isolé, purifié et remis en solution ces dérivés.

7. Procédé conforme à la revendication 6, caractérisé en ce qu'on effectue l'activation à 120-160°C, avec du diméthylacétamide et/ou de la N-méthyl-pyrrolidone, et l'on ajoute le chlorure de lithium après refroidissement à une température inférieure à 100°C.

8. Procédé conforme à la revendication 6, caractérisé en ce qu'on effectue l'activation à 20-120°C, avec de l'eau, et l'on remplace l'eau à la température ambiante.

9. Procédé conforme à l'une ou plusieurs des revendications 6 à 8, caractérisé en ce qu'on prépare les dérivés de cellulose par réaction dans un mélange de 92 à 88 % en poids de diméthylacétamide et/ou N-méthyl-pyrrolidone et de 8 à 12 % en poids de chlorure de lithium.

10. Procédé conforme à l'une ou plusieurs des revendications 6 à 9, caractérisé en ce que, lors de la réaction en phase homogène, la proportion pondérale, dans le mélange en solution, de cellulose ou d'éther de cellulose insoluble dans l'eau vaut de 5 à 30 % en poids.

11. Procédé conforme à l'une ou plusieurs des revendications 6 à 10, caractérisé en ce qu'on transforme en membranes d'hémodialyse des solutions des dérivés de cellulose obtenus, mélangés avec de la chitine et/ou un dérivé de chitine et/ou un polyacrylonitrile et/ou un polyamide.

12. Procédé conforme à la revendication 11, caractérisé en ce que le poids du dérivé de cellulose représente de 60 à 99 % et de préférence de 75 à 95 % du poids du mélange.

13. Procédé conforme à l'une ou plusieurs des revendications 6 à 10, caractérisé en ce qu'on transforme en membranes d'hémodialyse des solutions des dérivés de cellulose obtenus, mélangés avec de la cellulose.

14. Procédé conforme à la revendication 13, caractérisé en ce que le mélange contient de 1 à 20 % en poids du dérivé de cellulose.
